# EUROPÄISCHE PATENTSCHRIFT

(11) **EP 3 600 914 B1**
(45) Veröffentlichungstag und Bekanntmachung des Hinweises auf die Patenterteilung: **13.03.2024**
(21) Anmeldenummer: 18739760.9
(22) Anmeldetag: 27.06.2018
(51) Int. Cl.: B60B 37/06, G01M 17/10, B60B 17/00, B60B 35/04, B60B 35/14, B60B 35/08

(54) **RADSATZ FÜR FAHRZEUGE**
WHEELSET FOR VEHICLES
ESSIEU MONTÉ POUR VÉHICULES

(30) Priorität: 29.06.2017 AT 505362017
(43) Veröffentlichungstag der Anmeldung: 05.02.2020
(73) Patentinhaber: Siemens Mobility Austria GmbH, 1210 Wien (AT)
(72) Erfinder: MOSER, Christian, 8042 Graz (AT); WEBER, Franz-Josef, 8054 Graz (AT)
(74) Vertreter: Siemens Patent Attorneys
(86) Internationale Anmeldenummer: PCT/EP2018/067195
(87) Internationale Veröffentlichungsnummer: WO 2019/002343

(56) Entgegenhaltungen:
- EP-A1- 2 069 180
- EP-A1- 2 853 879
- DE-A1-102009 033 353
- DE-C- 876 697
- JP-A- 2011 046 243

## Beschreibung

Die Erfindung betrifft einen Radsatz für Fahrzeuge, insbesondere für Fahrwerke von Schienenfahrzeugen, der ein erstes Rad, ein zweites Rad sowie eine Radsatzwelle aufweist, wobei die Radsatzwelle zumindest ein erstes Segment, ein zweites Segment und ein drittes Segment umfasst, wobei zumindest das zweite Segment mit dem ersten Segment und mit dem dritten Segment stoffschlüssig verbunden ist, und wobei von dem ersten Segment, dem zweiten Segment und dem dritten Segment zumindest ein Segment als Hohlwelle und mit Fluid befüllbar ausgebildet ist.

Radsatzwellen müssen Kräfte zwischen Rädern übertragen und eine Anordnung von Radsatzkomponenten, z.B. Antriebs- und Bremskomponenten etc. auf dem Radsatz ermöglichen. Weiterhin sind eine hohe Bauteil- und Betriebssicherheit, eine geringe Masse, eine hohe Lebensdauer sowie geringe Kosten Auslegungsziele.

Beispielsweise beschreibt die Europäische Norm (EN) 13261 Anforderungen und Prüfverfahren für Radsatzwellen im Hinblick auf Materialien (chemische Zusammensetzung) und mechanische Eigenschaften.

Die EP 2 069 180 B1 beschreibt eine zwei- bzw. dreiteilige Radsatzwelle für eine achsreitende elektrische Antriebsmaschine. Ein Blechpaket eines Läufers der Maschine ist auf einer Außenmantelfläche eines Mittelsegments Radsatzwelle angeordnet. Das Mittelsegment ist als Hohlwelle ausgebildet. Mit dem Mittelsegment sind ein erstes Randsegment sowie ein zweites Randsegment verbunden. Auf dem ersten Randsegment und dem zweiten Randsegment sind Räder angeordnet. Das erste Randsegment und das zweite Randsegment umfassen Längsbohrungen für eine Ultraschallprüfung der Radsatzwelle. Durchmesser der Längsbohrungen sind geringer als Innendurchmesser des hohlen Mittelsegments.

Einzelne Segmente der Radsatzwelle sind mittels einer Reibschweißtechnik fest verbunden.

Weiterhin ist in der RU 2 255 014 C1 eine hohle Radsatzwelle einer Lokomotive mit einer Antriebseinheit offenbart. Die Radsatzwelle ist mit Schmiermittel gefüllt, das über radiale Kanäle Motorlagern zugeführt wird.

Darüber hinaus beschreibt die JP 2011-46243 A ein Risserkennungssystem für einen Fahrwerksrahmen eines Schienenfahrzeugs. Der Fahrwerksrahmen umfasst zwei Längsträger, welche Längsträger-Hohlräume, Ventile und Drucksensoren aufweisen. Die Längsträger-Hohlräume sind über Verbindungsbohrungen mit Querträger-Hohlräumen verbunden. Mittels einer Pumpe wird Gas in die Hohlräume eingefüllt und anhand von Druckzuständen Risse in dem Fahrwerksrahmen erkannt.

Die DE 876 697 C zeigt eine Hohlwelle, insbesondere für Schienenfahrzeuge, welche verschiedene Segmente umfasst. Diese Segmente weisen Hohlräume unterschiedlicher Geometrien auf. In Übergangsbereichen zwischen Segmenten sind Sitze für Radnaben vorgesehen. Schweißnähte zur Verbindung der Segmente sind mittig auf den Sitzen vorgesehen.

Die DE 10 2006 047 186 A1 offenbart eine Radsatzwelle, welche ein Hohlsegment aufweist, auf der ein Antriebsmotor angeordnet ist. Weiterhin sind Randsegmente vorgesehen, mit welchen Räder verbunden sein können.

In der DE 195 06 678 A1 ist ein Radsatz für Schienenfahrzeuge dargestellt, welcher Achsstummeln und ein Zwischenrohr aufweist. Räder sind zwischen den Achsstummeln und dem Zwischenrohr angeordnet und mittels Zugankern verspannt. Mit dem Zwischenrohr sind weiterhin Bremsscheiben verbunden.

Die DE 639 418 C zeigt weiterhin einen nabenlosen Radsatz, bei welchem ein hohler Achsschenkel unmittelbar in eine Stirnwand und eine Rückwand eines Radstegs übergeht und mit dem Radsteg, diesen nach außen hin abschließend, ein Radkranz verbunden ist.

Ferner ist in der DE 850 758 C ein Radsatz für Schienenfahrzeuge mit einer Hohlachse gezeigt, welche im Bereich ihrer Enden trompetenartig gekrümmt ausgeführt ist, wobei aus dieser trompetenartigen Krümmung ein Grundkörper eines Rads gebildet wird. Eine Oberseite dieses Grundkörpers ist mit einer Unterseite eines Radstegs verschweißt.

Die GB 2 073 118 A beschreibt einen Leichtbau-Radsatz für ein Schienenfahrzeug, bei dem ein röhrenförmiges Segment mit einem Randabschnitt verbunden ist. Der Randabschnitt weist einen Lagersitz, einen Sitz für ein Rad sowie eine axiale Bohrung auf, über welche im Zuge eines Fertigungsprozesses entstehende Schweißgase austreten können.

In der DE 864 408 C ist ein Herstellverfahren für Hohlachsen von Schienenfahrzeugen offenbart, bei welchem drei röhrenförmige Achssegmente miteinander verbunden sind. Ein Nabensitz auf einem Mittensegment wird mittels Aufstauchen und Aufdornen dieses Mittensegments erzeugt. Randsegmente werden mittels elektrischer Stumpfschweißung mit dem Mittensegment verbunden.

Darüber hinaus zeigt die GB 746,197 A ein Hohlwellensegment mit einem Radnabensitz und ein damit verbundenes Rad mit einem doppelwandigen, konvex und hohl ausgeführten Radsteg.

Weiterhin offenbart die DE 10 2009 033 353 A1 einen Radsatz für Schienenfahrzeuge mit einer Radsatz-Hohlwelle und zwei Rädern. Die Radsatz-Hohlwelle weist eine Längsbohrung mit einer Stützschraube auf. An die Längsbohrung kann zur Risskontrolle der Radsatz-Hohlwelle ein pneumatisches Druckbeaufschlagungsmittel angeschlossen werden.

Ferner sind aus dem Stand der Technik Radsatzwellen aus geschmiedeten Rohlingen bekannt, die Hohlbohrungen aufweisen. Bei einer Ausführung von Hohlbohrungen in Radsatzwellen ergeben sich jedoch insbesondere bei großen Wellendurchmessern hohe Materialverluste.

Der Erfindung liegt die Aufgabe zugrunde, einen gegenüber dem Stand der Technik weiterentwickelten Radsatz anzugeben.

Erfindungsgemäß wird diese Aufgabe gelöst mit einem Radsatz der eingangs genannten Art, bei dem zumindest eine erste Öffnung mit zumindest einem Ventil sowie zumindest ein Drucksensor vorgesehen sind.

Dadurch wird eine modulare und belastungsgerechte Ausführung der Radsatzwelle erzielt. Beispielsweise kann das zweite Segment aus einem anderen Werkstoff als das erste Segment und das dritte Segment gefertigt sein, eine unterschiedliche Geometrie oder unterschiedliche Dimensionen aufweisen.

Es werden eine Erkennung von Schäden (z.B. Durchrissen) der Radsatzwelle ermöglicht und somit eine erhöhte Betriebssicherheit sowie Vorteile in der Wartung und Instandhaltung erzielt.

Es ist günstig, wenn das erste Rad auf dem ersten Segment sowie auf dem zweiten Segment, das erste Segment und das zweite Segment überlappend, angeordnet ist und das zweite Rad auf dem zweiten Segment sowie auf dem dritten Segment, das zweite Segment und das dritte Segment überlappend, angeordnet ist.

Durch eine Anordnung des ersten Rads in einem ersten Übergangsbereich zwischen dem ersten Segment und dem zweiten Segment und des zweiten Rads in einem zweiten Übergangsbereich zwischen dem zweiten Segment und dem dritten Segment wird eine vorteilhafte Überdeckung des ersten Übergangsbereichs und des zweiten Übergangsbereichs erzielt. Der erste Übergangsbereich und der zweite Übergangsbereich sind vor Umgebungseinflüssen und Korrosion etc. geschützt.

Eine vorteilhafte Ausgestaltung erhält man, wenn von dem ersten Segment, dem zweiten Segment und dem dritten Segment zumindest ein Segment als dünnwandiges Rohr ausgeführt ist. Durch diese Maßnahme werden Widerstandsmomente der Radsatzwelle gegen Torsion erhöht und ein sparsamer Materialeinsatz bewirkt. Bei gleichem Werkstoffeinsatz können für die Hohlwelle im Vergleich zu einer Vollwelle eine Erhöhung der Festigkeit und somit der Bauteilsicherheit sowie eine Reduktion der Masse erzielt werden.

Eine vorteilhafte Lösung wird erzielt, wenn der zumindest eine Drucksensor Mittel zur Datenübertragung aufweist.

Die Mittel zur Datenübertragung können beispielsweise eine Funkschnittstelle aufweisen. Durch diese Maßnahme können Informationen, welche einen Schaden der Radsatzwelle anzeigen, rasch an einen Wartungsstand übermittelt werden.

Eine günstige Lösung erhält man, wenn von dem ersten Segment, dem zweiten Segment und dem dritten Segment zumindest ein Segment als Vollwelle ausgeführt ist.

Durch diese Maßnahme werden eine hohe Flexibilität und eine belastungsgerechte Ausführung der Radsatzwelle erzielt. Beispielsweise können das zweite Segment als Hohlwelle und das erste Segment sowie das dritte Segment als Vollwelle ausgeführt sein. Fügestellen des ersten Segments und des dritten Segments zu Komponenten wie Radsatzlagern können dadurch entlastet werden.

Es ist günstig, wenn zumindest das zweite Segment mit dem ersten Segment und mit dem dritten Segment reibverschweißt ist.

Durch diese Maßnahme können für das erste Segment, das zweite Segment und das dritte Segment unterschiedliche Werkstoffe eingesetzt werden. Weiterhin bewirken Reibschweißvorgänge kleine Wärmeeinflusszonen in Kontaktbereichen zwischen dem zweiten Segment und dem ersten Segment sowie dem zweiten Segment und dem dritten Segment. Dadurch werden nachteilige Veränderungen von mechanischen Eigenschaften der Radsatzwelle aufgrund der Reibschweißvorgänge vermieden.

Eine vorteilhafte Ausgestaltung erhält man, wenn zumindest das zweite Segment mit dem ersten Segment und mit dem dritten Segment abbrennstumpfverschweißt ist.

Durch diese Maßnahme werden Verunreinigungen von Schweißstellen vermieden und es wird eine Schutzgasatmosphäre in Bereichen der Schweißstellen erzeugt, welche die Schweißstellen schützen.

Nachfolgend wird die Erfindung anhand von Ausführungsbeispielen näher erläutert.

Es zeigen beispielhaft:
- Fig. 1:: Einen Seitenriss einer ersten beispielhaften Ausführungsvariante eines erfindungsgemäßen Radsatzes mit einem ersten Segment, einem zweiten Segment und einem dritten Segment in geschnittener Darstellung, und
- Fig. 2:: Einen Seitenriss einer zweiten beispielhaften Ausführungsvariante eines erfindungsgemäßen Radsatzes mit einem ersten Segment, einem zweiten Segment, einem dritten Segment, einem vierten Segment und einem fünften Segment.

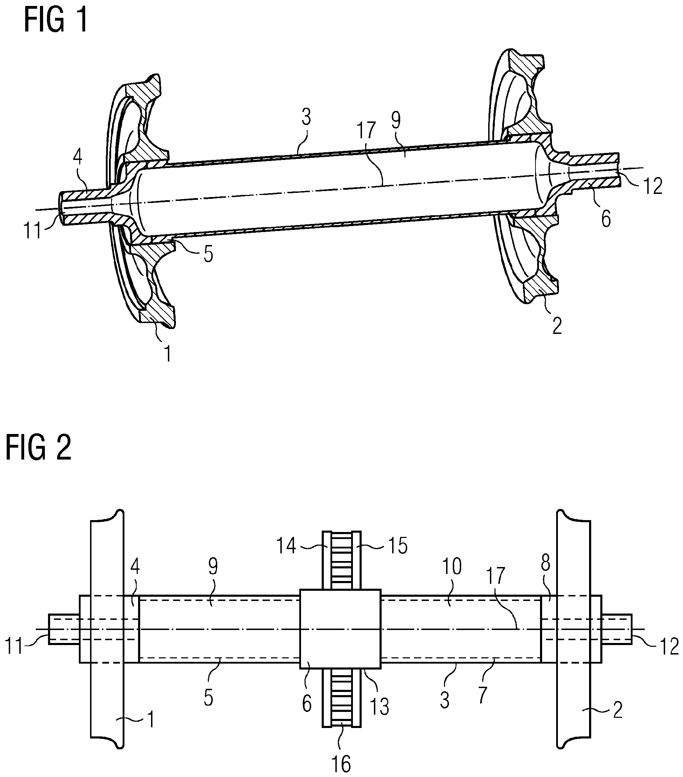

Ein in Fig. 1 dargestellter Seitenriss einer ersten beispielhaften Ausführungsvariante eines erfindungsgemäßen Radsatzes für ein Fahrwerk eines Schienenfahrzeugs in Schnittdarstellung umfasst ein erstes Rad 1 und ein zweites Rad 2, die über eine Radsatzwelle 3 miteinander verbunden sind.

Der Radsatz weist eine Radsatzlängsachse 17 auf. Die Radsatzwelle 3 umfasst ein erstes Segment 4, ein zweites Segment 5 und ein drittes Segment 6. Das zweite Segment 5 ist mit dem ersten Segment 4 und dem dritten Segment 6 reibverschweißt. Entsprechende Reibschweißvorgänge sind als aus dem Stand der Technik bekannte Rührreibschweißvorgänge ausgeführt. Es wird dabei ein Rohling des zweiten Segments 5 mit einem Rohling des ersten Segments 4 und einem Rohling des dritten Segments 6 ohne äußere Wärmeeinbringung verbunden. Das erste Segment 4 und das zweite Segment 5 werden aneinander geführt. Ein rotierendes Werkzeug drückt mit hoher Anpresskraft auf die Trennfuge zwischen dem ersten Segment 4 und dem zweiten Segment 5. Dadurch entsteht Reibung und Kontaktzonen zwischen dem ersten Segment 4 und dem zweiten Segment 5 werden erwärmt und plastifiziert. Dadurch werden eine Materialvermischung sowie eine sichere Verbindung zwischen dem ersten Segment 4 und dem zweiten Segment 5 erzeugt. Anschließend wird das mit dem ersten Segment 4 verschweißte zweite Segment 5 in gleicher Weise wie bezüglich des ersten Segments 4 mit dem dritten Segment 6 reibverschweißt.

Erfindungsgemäß ist es auch möglich, das zweite Segment 5 mit dem ersten Segment 4 und dem dritten Segment 6 mittels eines aus dem Stand der Technik bekannten Abbrennstumpfschweißverfahrens zu verbinden. Dabei wird Schweißwärme durch elektrischen Strom erzeugt. Der Rohling des ersten Segments 4 ist mit dem Rohling des zweiten Segments 5 punktuell in Kontakt, wodurch aufgrund einer hohen Stromdichte flüssige Kontaktzonen zwischen dem ersten Segment 4 und dem zweiten Segment 5 ausgebildet werden. Bei Erreichen einer erforderlichen Temperatur in den Kontaktzonen wird der elektrische Stromfluss unterbrochen und das erste Segment 4 an das zweite Segment 5 gepresst, wodurch zwischen dem ersten Segment 4 und dem zweiten Segment 5 eine feste Verbindung erzeugt wird. Anschließend wird das mit dem ersten Segment 4 verschweißte zweite Segment 5 in gleicher Weise wie bezüglich des ersten Segments 4 mit dem dritten Segment 6 abbrennstumpfverschweißt.

Aufgrund von Abbrennstumpfschweißvorgängen an Schweißnähten erzeugte Grate werden mittels Schleifvorgängen entfernt.

Das erste Rad 1 und das zweite Rad 2 sind auf die Radsatzwelle 3 aufgepresst. Das erste Rad 1 ist in einem Übergangsbereich zwischen dem ersten Segment 4 und dem zweiten Segment 5 angeordnet, das zweite Rad 2 in einem Übergangsbereich zwischen dem zweiten Segment 5 und dem dritten Segment 6. Das erste Rad 1 überdeckt eine nicht dargestellte erste Schweißnaht, das zweite Rad 2 eine ebenfalls nicht dargestellte zweite Schweißnaht. Dadurch sind die erste Schweißnaht und die zweite Schweißnaht vor Umgebungseinflüssen geschützt.

Das zweite Segment 5 ist als dünnwandiges Rohr ausgeführt, das mittels eines aus dem Stand der Technik bekannten Strangpressverfahrens gefertigt wird. Das erste Segment 4 und das dritte Segment 6 sind als geschmiedete Randsegmente mit einer Hohlbohrung bzw. als Hohlwellen ausgeführt. Das erste Segment 4 weist an seinem in Fig. 1 links dargestellten Ende einen kleineren Außendurchmesser auf als an seinem in Fig. 1 rechts gezeigten Ende.

Das dritte Segment 6 weist an seinem in Fig. 1 rechts dargestellten Ende einen kleineren Außendurchmesser auf als an seinem in Fig. 1 links gezeigten Ende.

In Bereichen dieser kleineren Durchmesser sind nicht dargestellte Radsatzlager auf die Radsatzwelle 3 aufgepresst. Die Radsatzwelle 3 weist gegenüber einer Vollwelle (massives, einstückiges Bauteil) mit gleicher Außenkontur eine um ca. 50% geringere Masse auf.

Das erste Segment 4, das zweite Segment 5 und das dritte Segment 6 weisen einen gemeinsamen ersten Innenraum 9 auf, der mit Druckluft gefüllt ist.

Über eine erste Öffnung 11 des ersten Segments 4 und eine zweite Öffnung 12 des dritten Segments 6 ist dieser erste Innenraum 9 mit Druckluft befüllbar und entlüftbar. In Bereichen der ersten Öffnung 11 und der zweiten Öffnung 12 sind dazu nicht dargestellte Ventile vorgesehen.

Die Ventile weisen standardisierte Adapter auf, mittels derer Druckmessgeräte (z.B. Manometer) und Druckversorgungsgeräte (z.B. Kompressoren oder Pumpen) anschließbar sind.

Mittels eines Druckmessgeräts können Luftdrücke im Stillstand des Schienenfahrzeugs gemessen (z.B. während eines Instandhaltungsvorgangs) und mit einem Druckgrenzwert verglichen werden. Ist der gemessene Luftdruck geringer als der Druckgrenzwert, so weist dies auf einen Schaden der Radsatzwelle 3 hin. Diese wird daraufhin repariert oder getauscht.

Mittels eines Druckversorgungsgeräts wird der Luftdruck des ersten Innenraums 9 auf ein Soll-Druckluftniveau gesteigert.

Weiterhin sind in Bereichen der ersten Öffnung 11 und der zweiten Öffnung 12 nicht dargestellte Drucksensoren vorgesehen. Mittels dieser Drucksensoren werden Luftdrücke in dem ersten Innenraum 9 und gegebenenfalls Druckabfälle auch während einer Fahrt des Schienenfahrzeugs erkannt. Ein Druckabfall in dem ersten Innenraum 9 im Betrieb des Schienenfahrzeugs zeigt einen Schaden (z.B. einen Durchriss) der Radsatzwelle 3 an.

Die Drucksensoren weisen als Mittel zur Datenübertragung Funkschnittstellen auf, über die Druckmessergebnisdaten betreffend den ersten Innenraum 9 an einen Wartungsstand übertragen werden. In dem Wartungsstand können auf Grundlage der übertragenen Druckmessergebnisdaten Warnereignisse ausgelöst werden. Wird beispielsweise der vordefinierte Druckgrenzwert unterschritten, so weist dies auf einen Schaden der Radsatzwelle 3 (z.B. einen Durchriss) hin und es werden in dem Wartungsstand erforderliche Wartungsvorgänge (z.B. ein Tausch der Radsatzwelle 3) geplant.

Weiterhin sind die Drucksensoren mittels der Funkschnittstelle mit einem Führerstand des Schienenfahrzeugs verbunden, wodurch auf Grundlage von in den Führerstand übertragenen Druckmessergebnisdaten auch in dem Führerstand Warnereignisse ausgelöst werden können, d.h. bei Detektion eines Schadens der Radsatzwelle 3 auf einer Anzeige ein entsprechender Warnhinweis dargestellt wird.

Erfindungsgemäß ist es auch denkbar, ein anderes Fluid als Druckluft, beispielsweise eine Hydraulikflüssigkeit, für eine Befüllung des ersten Innenraums 9 vorzusehen.

Fig. 2 zeigt eine Draufsicht auf eine zweite beispielhafte Ausführungsvariante eines erfindungsgemäßen Radsatzes für ein Fahrwerk eines Schienenfahrzeugs.

Der Radsatz weist eine Radsatzlängsachse 17 auf und umfasst ein erstes Rad 1 und ein zweites Rad 2, die auf eine Radsatzwelle 3 aufgepresst sind.

Die Radsatzwelle 3 weist ein erstes Segment 4, ein zweites Segment 5, ein drittes Segment 6, ein viertes Segment 7 sowie ein fünftes Segment 8 auf, die, wie in Zusammenhang mit Fig. 1 beschrieben, miteinander reibverschweißt sind. Das erste Segment 4 und das fünfte Segment 8 umfassen je eine Hohlbohrung. Das erste Segment 4 weist eine erste Öffnung 11 auf, das fünfte Segment 8 eine zweite Öffnung 12. Im Bereich der ersten Öffnung 11 sind ein nicht gezeigtes erstes Ventil sowie ein ebenfalls nicht dargestellter erster Drucksensor angeordnet. Im Bereich der zweiten Öffnung 12 sind ein nicht dargestelltes zweites Ventil sowie ein ebenfalls nicht gezeigter zweiter Drucksensor angeordnet.

Das zweite Segment 5 und das vierte Segment 7 sind als dünnwandige Rohre ausgeführt. Das erste Segment 4 und das zweite Segment 5 bilden einen ersten Innenraum 9, das vierte Segment 7 und das fünfte Segment 8 einen zweiten Innenraum 10.

Der erste Innenraum 9 und der zweite Innenraum 10 sind mit Druckluft gefüllt, die in einem unbeschädigten Zustand des ersten Segments 4 und des zweiten Segments 5 bzw. des vierten Segments 7 und des fünften Segments 8 nur über das erste Ventil bzw. das zweite Ventil entweichen kann.

Der erste Drucksensor misst Drücke in dem ersten Innenraum 9, der zweite Drucksensor Drücke in dem zweiten Innenraum 10. Der erste Drucksensor und der zweite Drucksensor weisen Mittel zur Datenübertragung auf, wodurch Ergebnisdaten bezüglich gemessener Drücke zur Auswertung an einen Wartungsstand übertragen werden. Ergibt die Auswertung, dass ein vordefinierter Druckgrenzwert unterschritten ist, wird ein Schaden (z.B. ein Durchriss) an der Radsatzwelle 3 angenommen.

Unterschreitet ein von dem ersten Drucksensor gemessener Druckwert den Druckgrenzwert, so wird angenommen, dass der Schaden im Bereich des ersten Segments 4 oder des zweiten Segments 5 aufgetreten ist.

Unterschreitet ein von dem zweiten Drucksensor gemessener Druckwert den Druckgrenzwert, so wird angenommen, dass der Schaden im Bereich des vierten Segments 7 oder des fünften Segments 8 aufgetreten ist.

Erfindungsgemäß ist es auch vorstellbar, dass über die Mittel zur Datenübertragung Druckmessergebnisdaten an eine nicht dargestellte Recheneinheit, die in dem Fahrwerk oder einem Wagenkasten des Schienenfahrzeugs angeordnet ist, übertragen werden. In der Recheneinheit werden die Druckmessergebnisdaten ausgewertet. Wird dabei eine Unterschreitung des Druckgrenzwerts festgestellt, wird über nicht dargestellte Datenleitungen zwischen der Recheneinheit und einem Führerstand des Schienenfahrzeugs ein Warnereignis in dem Führerstand ausgelöst und es werden einem Treibfahrzeugführer auf einer Anzeige Warnhinweise angezeigt.

Erfindungsgemäß ist es weiterhin denkbar, dass die Mittel zur Datenübertragung eine Kabelschnittstelle bzw. Buchsen aufweisen, wodurch bei Stillstand des Schienenfahrzeugs Kabel bzw. Datenstecker angeschlossen werden können, um Druckmessergebnisdaten auszulesen und diese auf einer Rechenstation auszuwerten.

Weiterhin ist es möglich, dass der erste Drucksensor und der zweite Drucksensoren Speichermodule aufweisen. Dadurch können Druckmessergebnisdaten gespeichert und einer zeitverzögerten Auswertung zugeführt werden.

Zwischen dem zweiten Segment 5 und dem vierten Segment 7 der Radsatzwelle 3 ist das dritte Segment 6 angeordnet. Es ist als Schmiedeteil ausgeführt und mit dem zweiten Segment 5 und dem vierten Segment 7 reibverschweißt.

Das dritte Segment 6 ist als Radsatzkomponente bzw. als Bremsscheibe 13 ausgebildet, d.h. ein zylindrischer Bereich, der mit dem zweiten Segment 5 und mit dem vierten Segment 7 verbunden ist, geht nahtlos in einen als Wellenbremsscheibe ausgebildeten Bereich über. Die Wellenbremsscheibe weist einen ersten Reibring 14 und einen zweiten Reibring 15 auf. Zwischen dem ersten Reibring 14 und dem zweiten Reibring 15 ist ein Kühlkörper 16 mit Kühlstäben und Kühlkanälen ausgebildet.

Erfindungsgemäß ist es auch vorstellbar, dass die Radsatzwelle 3 mehr als fünf Segmente aufweist. Die Segmente können, beispielsweise als Rohre oder als Schmiedeteile ausgeführt, in beliebiger Abfolge miteinander verbunden sein. Beispielsweise kann mit dem dritten Segment 6 ein nicht gezeigtes, geschmiedetes sechstes Segment verbunden sein, welches als Zahnrad eines Getriebes ausgeführt ist. Das sechste Segment weist einen zylindrischen Bereich auf, der nahtlos in einen Zahnkranz des Zahnrads übergeht.

Erfindungsgemäß ist es weiterhin möglich, dass als Radsatzkomponenten ausgebildete Segmente beispielsweise als Naben ausgeführt sind, mit denen erste Reibringe 14 und zweite Reibringe 15 von Bremsscheiben 13 verbunden sind. Darüber hinaus ist es auch denkbar, dass als Radsatzkomponenten ausgebildete Segmente als Radkörper, Scheibenräder etc. ausgeführt sind, wodurch auf ein Aufpressen des ersten Rads 1 und des zweiten Rads 2 auf die Radsatzwelle 3 verzichtet werden kann.

### Liste der Bezeichnungen

- 1: Erstes Rad
- 2: Zweites Rad
- 3: Radsatzwelle
- 4: Erstes Segment
- 5: Zweites Segment
- 6: Drittes Segment
- 7: Viertes Segment
- 8: Fünftes Segment
- 9: Erster Innenraum
- 10: Zweiter Innenraum
- 11: Erste Öffnung
- 12: Zweite Öffnung
- 13: Bremsscheibe
- 14: Erster Reibring
- 15: Zweiter Reibring
- 16: Kühlkörper
- 17: Radsatzlängsachse

## Patentansprüche

1. Radsatz für Fahrzeuge, insbesondere für Fahrwerke von Schienenfahrzeugen, der ein erstes Rad (1), ein zweites Rad (2) sowie eine Radsatzwelle (3) aufweist, wobei die Radsatzwelle (3) zumindest ein erstes Segment (4), ein zweites Segment (5) und ein drittes Segment (6) umfasst, wobei zumindest das zweite Segment (5) mit dem ersten Segment (4) und mit dem dritten Segment (6) stoffschlüssig verbunden ist, und wobei von dem ersten Segment (4), dem zweiten Segment (5) und dem dritten Segment (6) zumindest ein Segment als Hohlwelle und mit Fluid befüllbar ausgebildet ist, **dadurch gekennzeichnet, dass** zumindest eine erste Öffnung (11) mit zumindest einem Ventil sowie zumindest ein Drucksensor vorgesehen sind.

2. Radsatz nach Anspruch 1, **dadurch gekennzeichnet, dass** das erste Rad (1) auf dem ersten Segment (4) sowie auf dem zweiten Segment (5), das erste Segment (4) und das zweite Segment (5) überlappend, angeordnet ist und das zweite Rad (2) auf dem zweiten Segment (5) sowie auf dem dritten Segment (6), das zweite Segment (5) und das dritte Segment (6) überlappend, angeordnet ist.

3. Radsatz nach Anspruch 1 oder 2, **dadurch gekennzeichnet, dass** von dem ersten Segment (4), dem zweiten Segment (5) und dem dritten Segment (6) zumindest ein Segment als dünnwandiges Rohr ausgeführt ist.

4. Radsatz nach einem der Ansprüche 1, 2 oder 3, **dadurch gekennzeichnet, dass** das zumindest eine, mit Fluid befüllbar ausgebildete Segment mit Druckluft befüllbar ausgeführt ist.

5. Radsatz nach einem der Ansprüche 1, 2, 3 oder 4, **dadurch gekennzeichnet, dass** der zumindest eine Drucksensor Mittel zur Datenübertragung aufweist.

6. Radsatz nach Anspruch 5, **dadurch gekennzeichnet, dass** die Mittel zur Datenübertragung zumindest eine Funkschnittstelle aufweisen.

7. Radsatz nach einem der Ansprüche 1, 2, 3, 4, 5 oder 6, **dadurch gekennzeichnet, dass** an das zumindest eine Ventil Druckmessgeräte und Druckversorgungsgeräte anschließbar sind.

8. Radsatz nach einem der Ansprüche 1, 2, 3, 4, 5, 6 oder 7, **dadurch gekennzeichnet, dass** von dem ersten Segment (4), dem zweiten Segment (5) und dem dritten Segment (6) zumindest ein Segment als Vollwelle ausgeführt ist.

9. Radsatz nach einem der Ansprüche 1, 2, 3, 4, 5, 6, 7 oder 8, **dadurch gekennzeichnet, dass** zumindest das zweite Segment (5) mit dem ersten Segment (4) und mit dem dritten Segment (6) verschweißt ist.

10. Radsatz nach Anspruch 9, **dadurch gekennzeichnet, dass** zumindest das zweite Segment (5) mit dem ersten Segment (4) und mit dem dritten Segment (6) reibverschweißt ist.

11. Radsatz nach Anspruch 9, **dadurch gekennzeichnet, dass** zumindest das zweite Segment (5) mit dem ersten Segment (4) und mit dem dritten Segment (6) abbrennstumpfverschweißt ist.

12. Radsatz nach einem der Ansprüche 1, 2, 3, 4, 5, 6, 7, 8, 9, 10 oder 11, **dadurch gekennzeichnet, dass** von dem ersten Segment (4), dem zweiten Segment (5) und dem dritten Segment (6) zumindest ein Segment als Radsatzkomponente ausgeführt ist.

13. Radsatz nach Anspruch 12, **dadurch gekennzeichnet, dass** die Radsatzkomponente als Bremsscheibe (13) ausgeführt ist.

14. Radsatz nach Anspruch 12, **dadurch gekennzeichnet, dass** die Radsatzkomponente als zumindest ein Zahnrad ausgeführt ist.

## Claims

1. Wheelset for vehicles, in particular for chassis of rail vehicles, which has a first wheel (1), a second wheel (2) and a wheelset axle (3), wherein the wheelset axle (3) comprises at least a first segment (4), a second segment (5) and a third segment (6), wherein at least the second segment (5) is connected with a material bond to the first segment (4) and to the third segment (6), and wherein of the first segment (4), the second segment (5) and the third segment (6) at least one segment is embodied as a hollow shaft which can be filled with fluid,
**characterised in that** at least one first opening (11) with at least one valve and at least one pressure sensor are provided.

2. Wheelset according to claim 1, **characterised in that** the first wheel (1) is arranged on the first segment (4) and on the second segment (5) so as to overlap the first segment (4) and the second segment (5), and the second wheel (2) is arranged on the second segment (5) and on the third segment (6) so as to overlap the second segment (5) and the third segment (6).

3. Wheelset according to claim 1 or 2, **characterised in that** of the first segment (4), the second segment (5) and the third segment (6) at least one segment is designed as a thin-walled pipe.

4. Wheelset according to one of claims 1, 2 or 3, **characterised in that** the at least one segment embodied as fillable with fluid is designed to be fillable with compressed air.

5. Wheelset according to one of claims 1, 2, 3 or 4, **characterised in that** the at least one pressure sensor has means for data transfer.

6. Wheelset according to claim 5, **characterised in that** the means for data transfer have at least one radio interface.

7. Wheelset according to one of claims 1, 2, 3, 4, 5 or 6, **characterised in that** pressure measuring devices and pressure supply devices can be connected to the at least one valve.

8. Wheelset according to one of claims 1, 2, 3, 4, 5, 6 or 7, **characterised in that** of the first segment (4), the second segment (5) and the third segment (6) at least one segment is designed as a solid shaft.

9. Wheelset according to one of claims 1, 2, 3, 4, 5, 6, 7 or 8, **characterised in that** at least the second segment (5) is welded to the first segment (4) and to the third segment (6).

10. Wheelset according to claim 9, **characterised in that** at least the second segment (5) is friction-welded to the first segment (4) and to the third segment (6).

11. Wheelset according to claim 9, **characterised in that** at least the second segment (5) is flash-butt welded to the first segment (4) and to the third segment (6).

12. Wheelset according to one of claims 1, 2, 3, 4, 5, 6, 7, 8, 9, 10 or 11, **characterised in that** of the first segment (4), the second segment (5) and the third segment (6) at least one segment is embodied as a wheelset component.

13. Wheelset according to claim 12, **characterised in that** the wheelset component is designed as a brake disc (13).

14. Wheelset according to claim 12, **characterised in that** the wheelset component is designed as at least one gear wheel.

## Revendications

1. Jeu de roues pour véhicules, en particulier pour trains de roulement de véhicules ferroviaires, qui présente une première roue (1), une deuxième roue (2) ainsi qu'un arbre d'essieu (3), l'arbre d'essieu (3) comprenant au moins un premier segment (4), un deuxième segment (5) et un troisième segment (6),
dans lequel au moins le deuxième segment (5) est relié au premier segment (4) et au troisième segment (6) par une liaison matérielle, et dans lequel au moins un segment du premier segment (4), du deuxième segment (5) et du troisième segment (6) est réalisé sous la forme d'un arbre creux et peut être rempli de fluide,
**caractérisé en ce qu'**au moins une première ouverture (11) avec au moins une soupape ainsi qu'au moins un capteur de pression sont prévus.

2. Jeu de roues selon la revendication 1, **caractérisé en ce que** la première roue (1) est disposée sur le premier segment (4) ainsi que sur le deuxième segment (5), le premier segment (4) et le deuxième segment (5) se chevauchant, et la deuxième roue (2) est disposée sur le deuxième segment (5) ainsi que sur le troisième segment (6), le deuxième segment (5) et le troisième segment (6) se chevauchant.

3. Jeu de roues selon la revendication 1 ou 2, **caractérisé en ce que** parmi le premier segment (4), le deuxième segment (5) et le troisième segment (6), au moins un segment est réalisé sous la forme d'un tube à paroi mince.

4. Jeu de roues selon l'une des revendications 1, 2 ou 3, **caractérisé en ce que** le au moins un segment réalisé de manière à pouvoir être rempli de fluide est réalisé de manière à pouvoir être rempli d'air comprimé.

5. Jeu de roues selon l'une des revendications 1, 2, 3 ou 4, **caractérisé en ce que** le au moins un capteur de pression présente des moyens de transmission de données.

6. Jeu de roues selon la revendication 5, **caractérisé en ce que** les moyens de transmission de données présentent au moins une interface radio.

7. Jeu de roues selon l'une des revendications 1, 2, 3, 4, 5 ou 6, **caractérisé en ce que** des appareils de mesure de la pression et des appareils d'alimentation de pression peuvent être raccordés à ladite au moins une soupape.

8. Jeu de roues selon l'une des revendications 1, 2, 3, 4, 5, 6 ou 7, **caractérisé en ce que** parmi le premier segment (4), le deuxième segment (5) et le troisième segment (6), au moins un segment est réalisé sous la forme d'un arbre plein.

9. Jeu de roues selon l'une des revendications 1, 2, 3, 4, 5, 6, 7 ou 8, **caractérisé en ce qu'**au moins le deuxième segment (5) est soudé au premier segment (4) et au troisième segment (6).

10. Jeu de roues selon la revendication 9, **caractérisé en ce qu'**au moins le deuxième segment (5) est soudé par friction au premier segment (4) et au troisième segment (6).

11. Jeu de roues selon la revendication 9, **caractérisé en ce qu'**au moins le deuxième segment (5) est soudé de bout en bout par étincelage au premier segment (4) et au troisième segment (6).

12. Jeu de roues selon l'une des revendications 1, 2, 3, 4, 5, 6, 7, 8, 9, 10 ou 11, **caractérisé en ce que** parmi le premier segment (4), le deuxième segment (5) et le troisième segment (6), au moins un segment est réalisé en tant que composant de jeu de roues.

13. Jeu de roues selon la revendication 12, **caractérisé en ce que** le composant de jeu de roues est réalisé sous la forme d'un disque de frein (13).

14. Jeu de roues selon la revendication 12, **caractérisé en ce que** le composant de jeu de roues est réalisé sous la forme d'au moins une roue dentée.
